# EUROPÄISCHE PATENTSCHRIFT

(11) **EP 1 890 506 B1**
(45) Veröffentlichungstag und Bekanntmachung des Hinweises auf die Patenterteilung: **05.10.2016**
(21) Anmeldenummer: 07114325.9
(22) Anmeldetag: 14.08.2007
(51) Int. Cl.: H04W 88/02, H04W 8/24

(54) **Verfahren zum Betreiben eines elektronischen Endgerätes sowie elektronisches Endgerät**
Method for operating an electronic terminal and electronic terminal
Procédé de fonctionnement d'un terminal électronique ainsi que terminal électronique

(30) Priorität: 16.08.2006 DE 102006038146
(43) Veröffentlichungstag der Anmeldung: 20.02.2008
(73) Patentinhaber: Vodafone GmbH, 40549 Düsseldorf (DE)
(72) Erfinder: Lorentz, Bernhard, Dr., 40457 Düsseldorf (DE); Hertle, Jochen, Dr., 85521 Ottobrunn (DE)
(74) Vertreter: Müller, Thomas

(56) Entgegenhaltungen:
- EP-A1- 1 585 352
- WO-A1-2006/074827
- DE-A1- 19 833 777

## Beschreibung

Die vorliegende Erfindung betrifft ein Verfahren zum Betreiben eines elektronischen Endgerätes, wobei das Endgerät eine erste Schnittstelle zu einem zellularen Telekommunikationsnetz sowie mindestens eine weitere Schnittstelle, insbesondere eine Schnittstelle zur Nahfeldkommunikation, zur Kommunikation mit weiteren elektronischen Endgeräten aufweist. Ferner betrifft die Erfindung ein elektronisches Endgerät mit einer ersten Schnittstelle zu einem zellularen Telekommunikationsnetz, mit mindestens einer weiteren Schnittstelle, insbesondere einer Schnittstelle zur Nahfeldkommunikation, zur Kommunikation mit weiteren elektronischen Endgeräten und mit einer Konfigurationsnachrichtempfangseinheit zum Empfang von speziellen Konfigurationsnachrichten.

Aktuelle Diskussionen in der Presse und in der Öffentlichkeit beleuchten das Problem der Aufnahme von jugendgefährdenden Bilder und Videos, insbesondere Gewaltvideos, durch elektronische Endgeräte, insbesondere durch Mobiltelefone, und das Verbreiten derartiger Bilder und Videos über entsprechende Schnittstellen der elektronischen Endgeräte zu anderen elektronischen Endgeräten. Insbesondere über Funkschnittstellen der elektronischen Endgeräte können derartige Videos einfach, schnell und kostenlos an andere elektronische Endgeräte übertragen werden, so dass die Verbreitung dieser jugendgefährdenden Bilder und Videos nicht verhindert werden kann.

Um die Verbreitung derartiger jugendgefährdenden Bilder und Videos zu unterbinden existieren zurzeit die nachfolgend beschriebenen Verfahren:
Zum einen kann durch eine manuelle Konfiguration des elektronischen Endgerätes dieses gesperrt werden für den Empfang bzw. das Verbreiten von Bildern und Videos. Hierbei kann durch die Eingabe eines bestimmten Pins eine eingeschränkte Nutzung des elektronischen Endgerätes eingestellt werden. Dies erfolgt allerdings durch den Benutzer des elektronischen Endgerätes selbst, so dass dies auch wieder einfach rückgängig gemacht werden kann. Ferner ist bei diesem Verfahren zum Betreiben eines elektronischen Endgerätes ein hoher Aufwand in der Software des elektronischen Endgerätes erforderlich, insbesondere eine zusätzliche Menüführung, sowie die Ausgabe bzw. Verwaltung einer speziellen PIN für die Sperrung bzw. Freischaltung der Weitergabe von Bildern und/oder Videos.

Zum anderen können die Eigenschaften von elektronischen Endgeräten durch das Verwenden spezieller Telefonkarten, wie SIM- oder USIM-Karten, automatisch gesteuert werden. Nachteilig hierbei ist der Aufwand für die zusätzlichen speziellen Telefonkarten. Dies verursacht erheblich höhere Kosten sowie eine eigens auf die zusätzlichen speziellen Telefonkarten abgestimmte Software in dem elektronischen Endgerät. Ferner bedeutet dies einen hohen Verwaltungsaufwand sowohl für die Betreiber eines Telekommunikationsnetzes als auch für die Händler, die Verträge zwischen einem Endnutzer und dem Betreiber eines Kommunikationsnetzes vermitteln.

In der EP 1 585 352 A1 ist ein elektronisches Endgerät beschrieben, welches eine erste Schnittstelle zum Telekommunikationsnetz und eine zweite Schnittstellen zur Nahfeldkommunikation aufweist. Das elektronische Endgerät verfügt somit über die Möglichkeit, innerhalb des elektronischen Endgeräts verschiedene Kommunikationsprofüe bereitzustellen. Über die Schnittstelle zum Telekommunikationsnetz können Daten empfangen werden, die die Schnittstelle zur Nahfeldkommunikation beeinflussen.

In der WO 2006/074827 A1 ist ein elektronisches Endgerät beschrieben, welches mehrere Netzwerk-Schnittstellen unterschiedlicher Ausprägung aufweist, wobei bei Bedarf eine der Schnittstellen aktiviert werden kann.

Aufgabe der vorliegenden Erfindung ist es, ein Verfahren zum Betreiben eines elektronischen Endgerätes bzw. ein elektronisches Endgerät zu schaffen, durch das ausgewählte Eigenschaften des elektronischen Endgerätes einfach und kostengünstig gesperrt bzw. wieder freigegeben werden können, so dass Bilder und Videos nicht durch das elektronischen Endgerät verbreitet werden können. Insbesondere soll ein sicheres, kostengünstiges und kontrolliertes Verhindern von Übertragungen von jugendgefährdenden Bilder und Videos durch ein elektronischen Endgerät ermöglicht werden.

Diese Aufgabe wird erfindungsgemäß durch ein Verfahren zum Betreiben eines elektronischen Endgerätes mit den Merkmalen gemäß dem unabhängigen Patentanspruch 1 sowie durch ein elektronisches Endgerät mit den Merkmalen gemäß dem unabhängigen Patentanspruch 5 gelöst. Weitere Vorteile, Merkmale, Details, Aspekte und Effekte der Erfindung ergeben sich aus den Unteransprüchen sowie der Beschreibung. Merkmale und Details, die im Zusammenhang mit dem erfindungsgemäßen Verfahren zum Betreiben eines elektronischen Endgerätes gemäß Patentanspruch 1 beschrieben werden, gelten dabei selbstverständlich auch im Zusammenhang mit dem elektronischen Endgerät gemäß Patentanspruch 7, und umgekehrt.

Die Aufgabe wird gemäß dem ersten Aspekt der Erfindung durch ein Verfahren zum Betreiben eines elektronischen Endgerätes gelöst, wobei das Endgerät eine erste Schnittstelle zu einem zellularen Telekommunikationsnetz sowie mindestens eine weitere Schnittstelle, insbesondere eine Schnittstelle zur Nahfeldkommunikation, zur Kommunikation mit weiteren elektronischen Endgeräten aufweist. Das Verfahren ist durch folgende vom dem elektronischen Endgerät durchgeführte Schritte gekennzeichnet
a) Empfangen einer speziellen, nicht reproduzierbaren Konfigurationsnachricht in Form einer Kurznachricht, aus dem zellularen Telekommunikationsnetz über die erste Schnittstelle, wobei die spezielle Konfigurationsnachricht Zeichen, insbesondere hexadezimale Zeichen, enthält, die nicht über die Tastatur eines elektronischen Endgerätes eingebbar sind;
b) Interpretieren der speziellen Konfigurationsnachricht, und Erkennen, dass es sich um eine spezielle Konfigurationsnachricht handelt, durch eine Interpretationseinheit des elektronischen Endgerätes, wobei die spezielle Konfigurationsnachricht, nachdem sie von der Interpretationseinheit des elektronischen Endgeräts als Konfigurationsnachricht erkannt worden ist, nicht als empfangene Nachricht auf einer Anzeigeeinheit des elektronischen Endgeräts angezeigt wird;
c) Automatisches Extrahieren von Konfigurationsinformationen, die zum Sperren der mindestens einen weiteren Schnittstelle genutzt werden, aus der Konfigurationsnachricht durch das elektronische Endgerät mittels einer Extrahierungseinheit;
d) Automatisches Sperren der mindestens einen weiteren Schnittstelle durch das elektronische Endgerät durch eine Umkonfiguration des elektronischen Endgeräts mittels der extrahieren Konfigurationsinformationen zum Verhindern einer Kommunikation des elektronischen Endgeräts zu einem weiteren elektronischen Endgerät über die mindestens eine weitere Schnittstelle, wobei die Sperrung als verborgene Aktion in dem elektronischen Endgerät abläuft.

Durch ein derartiges Verfahren zum Betreiben eines elektronischen Endgerätes können ausgewählte Schnittstellen des elektronischen Endgerätes einfach und kostengünstig gesperrt bzw. wieder freigegeben werden können. Insbesondere kann ein sicheres und kontrolliertes Verhindern von Übertragungen von jugendgefährdenden Bilder und Videos durch ein elektronisches Endgerät ermöglicht werden.

Ein elektronisches Endgerät in Lichte der Erfindung kann ein Mobiltelefon, ein PDA, ein Smartphone oder ein ähnliches portables elektronisches Kleingerät sein, welches geeignet ist über entsprechenden Schnittstellen Daten zu übertragen.

Das elektronische Endgerät weist eine erste Schnittstelle zu einem zellularen Telekommunikationsnetz sowie mindestens eine weitere Schnittstelle zur Kommunikation mit weiteren elektronischen Endgeräten auf. Die erste Schnittstelle ist derart ausgebildet, dass sie keine Bilder oder Videos übertragen kann. Über die mindestens eine weitere Schnittstelle, die als leitungsgebundene Schnittstelle oder als Funkschnittstelle ausgebildet sein kann, können einfach und schnell Daten, d.h.

Texte, Bilder und/oder Videos, auf ein anderes elektronisches Endgerät übertragen werden. Die mindestens eine weitere Schnittstelle kann beispielsweise als USB-Schnittstelle, Bluetooth-, Zarlink-, WLAN-, Nahfeldkommunikation- oder als Infrarotschnittstelle ausgebildet sein. Bevorzugt ist die mindestens eine weitere Schnittstelle des elektronischen Endgerätes als Schnittstelle zur Nahfeldkommunikation ausgebildet. Dies ermöglicht einen Datenaustausch zwischen dem elektronischen Endgerät und einem weiteren elektronischen Endgerät, wenn beide Endgeräte sehr nah aneinander gehalten werden.

Das erfindungsgemäße Verfahren sieht vor, dass in einem ersten Schritt das elektronische Endgerät eine spezielle Konfigurationsnachricht, insbesondere eine Kurznachricht in Form einer SMS, aus dem zellularen Telekommunikationsnetz über die erste Schnittstelle empfängt. Die spezielle Konfigurationsnachricht ist eine aus dem zellularen Telekommunikationsnetz gezielt für das elektronische Endgerät gesendete Nachricht. Da die spezielle Konfigurationsnachricht aus dem zellularen Telekommunikationsnetz gesendet wird, können nur autorisierte Absender die spezielle Konfigurationsnachricht versenden. D.h., die spezielle Konfigurationsnachricht kann insbesondere der Betreiber des zellularen Telekommunikationsnetzes oder ein Händler, bei denen das elektronische Endgerät bezogen wird, versenden. Je nach Alter des Käufers des elektronischen Endgerätes bzw. für den das elektronische Endgerät bestimmt ist, sendet der Betreiber des zellularen Telekommunikationsnetzes oder der Händler die spezielle Konfigurationsnachricht an das elektronische Endgerät. Die Nachricht wird über eine erste Schnittstelle des elektronischen Endgerätes empfangen. Die Nachricht wird bevorzugt in Form einer SMS versendet, kann aber auch in einer anderen Form, beispielsweise als Email oder Ähnliches, versendet werden. Die spezielle Konfigurationsnachricht wird in einem Format an das elektronische Endgerät übertragen, das anders ist als die Formate, die bei der Übertragung von Bildern oder Videos genutzt werden.

Nach dem Empfang der speziellen Konfigurationsnachricht interpretiert eine Interpretationseinheit des elektronischen Endgerätes die spezielle Konfigurationsnachricht. D.h., das elektronische Endgerät erkennt, dass es sich um eine spezielle Konfigurationsnachricht handelt. Nach dem Erkennen der speziellen Konfigurationsnachricht als solche, extrahiert eine Extrahierungseinheit des elektronischen Endgerätes Konfigurationsinformationen aus der speziellen Konfigurationsnachricht. Anhand dieser Konfigurationsinformationen kann das Betreiben des elektronischen Endgerätes verändert werden. D.h., in einem letzten Schritt wird die mindestens eine weiteren Schnittstelle aufgrund der extrahieren Konfigurationsinformationen gesperrt, um eine Kommunikation des elektronischen Endgerätes zu einem weiteren elektronischen Endgerät über die mindestens eine weitere Schnittstelle zu verhindern. D.h., die Konfigurationsinformationen werden zur Steuerung der mindestens einen weiteren Schnittstelle genutzt.

Durch das Sperren der mindestens einen weiteren Schnittstelle mittels der empfangenen speziellen Konfigurationsnachricht kann einfach und schnell durch eine autorisierte Stelle der Betrieb des elektronischen Endgerätes beeinflusst werden, insbesondere derart, dass die Schnittstellen des elektronischen Endgerätes, über die jugendgefährdende Bilder oder Videos an andere elektronische Endgeräte übertragen werden können, gesperrt werden. Hierdurch ist das Betreiben der elektronischen Endgeräte zwar eingeschränkt, aber das Vertreiben von jugendgefährdenden Bilder und Videos kann verhindert werden. Vorteilhaft bei dem Verfahren ist, dass die zum Sperren der mindestens einen weiteren Schnittstelle notwendige spezielle Konfigurationsnachricht nur von einer speziell autorisierten Stelle versendet werden kann, so dass ein Missbrauch ausgeschlossen werden kann. Die spezielle Konfigurationsnachricht ist dabei derart ausgestaltet, dass ein Weiterleiten, das Löschen oder ein Verändern der speziellen Konfigurationsnachricht nicht möglich ist. Nach dem Empfang der speziellen Konfigurationsnachricht durch das elektronischen Endgerät und die Interpretation dieser Nachricht als spezielle Konfigurationsnachricht, werden die Extrahierung und das Sperren der entsprechenden weiteren Schnittstellen automatisch durch das elektronische Endgerät selbst vorgenommen. Die erste Schnittstelle des elektronischen Endgerätes wird dabei nicht gesperrt, so dass über sie weiter Daten übertragbar sind. Die erste Schnittstelle ist bevorzugt eine Schnittstelle, die zur Übertragung von Kurznachrichten in Form einer SMS geeignet ist, so dass zum einen der Empfang spezieller Konfigurationsnachrichten in Form von Kurznachrichten weiterhin ermöglicht wird. Zum anderen können zwischen dem elektronischen Endgerät und anderen elektronischen Endgeräten weiterhin Kurznachrichten verschickt werden.

Bevorzugt ist ferner ein Verfahren zum Betreiben eines elektronischen Endgerätes, bei dem das elektronische Endgerät eine weitere spezielle Konfigurationsnachricht, insbesondere eine weitere Kurznachricht, aus dem zellularen Telekommunikationsnetz über die erste Schnittstelle empfängt, bei dem die Interpretationseinheit des elektronischen Endgerätes die weitere spezielle Konfigurationsnachricht interpretiert, bei dem die Extrahierungseinheit Konfigurationsinformationen aus der weiteren Konfigurationsnachricht extrahiert und bei dem das elektronische Endgerät aufgrund der extrahierten Konfigurationsinformationen die mindestens eine weitere Schnittstelle zum Ermöglichen einer Kommunikation zu einem weiteren elektronischen Endgerät über die mindestens eine weitere Schnittstelle fireischaltet. Dieser Verfahrenschritt ermöglicht das Freischalten von gesperrten weiteren Schnittstellen des elektronischen Endgerätes. Die weitere spezielle Konfigurationsnachricht wird wiederum von einer autorisierten Stelle an das elektronische Endgerät gesendet. Die spezielle Konfigurationsnachricht ist dabei so konzipiert, dass von keiner anderen ungefugten Stelle die Freischaltung der gesperrten weiteren Schnittstellen ermöglicht wird. Die spezielle und die weitere spezielle Konfigurationsnachricht werden, nachdem sie von der Interpretationseinheit des elektronischen Endgerätes als Konfigurationsnachrichten erkannt worden sind, nicht als empfangene Nachricht auf einer Anzeigeeinheit, insbesondere dem Display, des elektronischen Endgerätes angezeigt. Hierdurch kann der Nutzer des elektronischen Endgerätes nicht direkt erkennen, dass das elektronische Endgerät eine derartige Konfigurationsnachricht empfangen hat. Die Sperrung bzw. das Freischalten läuft automatisch als verborgene Aktion in dem elektronischen Endgerät ab. Der Nutzer erkennt die Sperrung lediglich daran, dass keine Bilder oder Videos von dem elektronischen Endgerät verbreitet bzw. empfangen werden können.

Bevorzugt ist ferner ein zuvor beschriebenes Verfahren, bei dem die spezielle Konfigurationsnachricht so ausgestaltet ist, dass sie nicht von einem Teilnehmer des zellularen Telekommunikationsnetzes gesendet werden kann. D.h., lediglich autorisierte Stellen, wie der Betreiber oder ein Händler, in der Regel ein Vertragshändler, können derartige spezielle Konfigurationsnachrichten erstellen und versenden.

Damit die speziellen Konfigurationsnachrichten nicht reproduzierbar sind, sind diese besonders ausgestaltet. Die spezielle Konfigurationsnachricht enthält Zeichen, insbesondere hexadezimale Zeichen, die nicht über die Tastatur eines elektronischen Endgerätes eingebbar sind. Hierdurch kann eine derartige spezielle Konfigurationsnachricht nicht von einem Nutzer eines elektronischen Endgerätes selbst erzeugt werden, um so eine Freischaltung mindestens einer weiteren gesperrten Schnittstelle eines anderen elektronischen Endgerätes vorzunehmen. Die speziellen Konfigurationsnachrichten und auch die Verarbeitung dieser speziellen Konfigurationsnachrichten innerhalb des elektronischen Endgerätes sind dabei so aufgebaut, dass sie nicht von dem Benutzer des elektronischen Endgerätes in irgendeiner Weise reproduziert werden können. Die Kontrolle über die speziellen Konfigurationsnachrichten wird dabei derart realisiert, dass die speziellen Konfigurationsnachrichten in einem gesicherten Bereich der autorisierten Stelle, d.h. des Betreibers des Telekommunikationsnetzes, hinterlegt sind und nur durch eine Aktivierung seitens autorisierten Personals vorgenommen werden kann.

Bevorzugt ist ferner ein Verfahrenschritt, wobei die mindestens eine weitere Schnittstelle, die durch die empfangene spezielle Konfigurationsnachricht gesperrt oder freigeschaltet wird, mittels der Bluetooth-, der Zarlink-, der WLAN-, der Nahfeldkommunikation- oder der Infrarottechnologie operiert. Diese Schnittstellen eignen sich besonders gut zur Übertragung von Bildern und Videos an andere elektronische Endgeräte. Bei dem Verfahren ist vorteilhafterweise vorgesehen, dass alle weiteren Schnittstellen, über die Bilder oder Videos übertragen werden können, durch die empfangene spezielle Konfigurationsnachricht automatisch gesperrt werden, so dass ein Empfangen und ein Verbreiten von jugendgefährdenden Bildern und Videos gänzlich verhindert wird. Nur die Schnittstelle, die zum Empfang von Kurznachrichten, insbesondere einer weiteren speziellen Konfigurationsnachricht zum Freischalten der gesperrten Schnittstellen, geeignet ist, wird nicht gesperrt.

Erfindungsgemäß erfolgt das Sperren oder Freischalten der mindestens einen weiteren Schnittstelle zum Verhindern oder Ermöglichen der Kommunikation zu einem weiteren elektronischen Endgerät durch eine Umkonfiguration des elektronischen Endgerätes. Die Umkonfiguration der Steuerung der mindestens einen weiteren Schnittstelle erfolgt mittels der empfangenen speziellen Konfigurationsnachricht, d.h., durch die Konfigurationsinformationen der speziellen Konfigurationsnachricht. D.h. es wird in die Grundeinstellung bzw. Grundkonfiguration des elektronischen Endgerätes eingegriffen, was manuell durch den Nutzer des elektronischen Endgerätes nicht möglich ist. Dieser Zugriff auf die Schnittstellen erfordert spezielles Wissen, was nur der Betreiber des Telekommunkaktionsnetzes hat.

Gemäß eines zweiten Aspektes der Erfindung wird die Aufgabe durch ein elektronisches Endgerät gelöst, mit einer ersten Schnittstelle zu einem zellularen Telekommunikationsnetz, mit mindestens einer weiteren Schnittstelle, insbesondere einer Schnittstelle zur Nahfeldkommunikation, zur Kommunikation mit weiteren elektronischen Endgeräten und mit einer Konfigurationsnachrichtempfangseinheit zum Empfang von speziellen, nicht reproduzierbaren Konfigurationsnachrichten in Form von Kurznachrichten aus dem zellularen Telekommunikationsnetz, wobei die spezielle Konfigurationsnachricht Zeichen, insbesondere hexadezimale Zeichen, enthält, die nicht über die Tastatur eines elektronischen Endgerätes eingebbar sind. Das elektronische Endgerät ist dadurch gekennzeichnet, dass das elektronischen Endgerät aufweist eine Interpretationseinheit zum Interpretieren einer speziellen Konfigurationsnachricht zum Erkennen, dass es sich um eine spezielle Konfigurationsnachricht handelt, wobei die spezielle Konfigurationsnachricht, nachdem sie von der Interpretationseinheit des elektronischen Endgeräts als Konfigurationsnachricht erkannt worden ist, nicht als empfangene Nachricht auf einer Anzeigeeinheit des elektronischen Endgeräts angezeigt wird, eine Extrahierungseinheit zum automatischen Extrahieren von Konfigurationsinformationen, die zum Sperren der mindestens einen weiteren Schnittstelle genutzt werden, aus der speziellen Konfigurationsnachricht und eine Deaktivierungseinheit zum automatischen Sperren und/oder Freischalten der mindestens einen weiteren Schnittstelle durch eine Umkonfiguration des elektronischen Endgeräts aufgrund der extrahieren Konfigurationsinformationen zum Verhindern oder Herstellen einer Kommunikation des elektronischen Endgeräts zu einem weiteren elektronischen Endgerät über die mindestens eine weitere Schnittstelle, aufweist, wobei die Sperrung und/oder Freischaltung als verborgene Aktion in dem elektronischen Endgerät abläuft

Ein derartiges elektronisches Endgerät ermöglicht ein sicheres und kontrolliertes Verhindern von Übertragungen von jugendgefährdenden Bilder und Videos von und zu dem elektronischen Endgerät. Das elektronische Endgerät in Lichte dieser Erfindung kann ein Mobiltelefon, ein PDA, ein Smartphone oder ein ähnliches portables elektronisches Kleingerät sein, welches geeignet ist über entsprechenden Schnittstellen Daten, wie Kurznachrichten sowie Bilder oder Videos, zu übertragen.

Das erfindungsgemäße elektronische Endgerät ermöglicht, dass von einer autorisierten Stelle, insbesondere von Seiten des Betreibers des Telekommunikationsnetzes, in dem das elektronische Endgerät teilnimmt, eine Umkonfigurierung des elektronischen Endgerätes erfolgen kann, um das Betreiben des elektronisches Endgerätes einzuschränken. D.h., das elektronische Endgerät ist derart ausgebildet, dass durch den Empfang einer speziellen Konfigurationsnachricht automatisch eine Sperrung von Schnittstellen erfolgt, die geeignet sind Bilder und Videos an andere elektronische Endgeräte zu übertragen. Das elektronische Endgerät ist ein modifiziertes gewöhnliches elektronisches Endgerät. Es weist zusätzlich zu einem gewöhnlichen elektronischen Endgerät eine Interpretationseinheit, eine Extrahierungseinheit sowie eine Aktivierungs- bzw. Deaktivierungseinheit auf. Äußerlich ist das erfindungsgemäße elektronische Endgerät von einem gewöhnlichen elektronischen Endgerät nicht zu unterscheiden, was die Akzeptanz dieses modifizierten elektronischen Endgerätes fördert. Das elektronische Endgerät kann einfach und kostengünstig mit den zusätzlichen zuvor erwähnten Einheiten ausgestattet werden. Durch ein derartiges elektronisches Endgerät bleibt die Kontrolle über die Sperrung oder das Freischalten von Schnittstellen des elektronischen Endgerätes, die zur Weitergabe von jugendgefährdenden Bildern und Videos geeignet sind, insbesondere bei dem Telekommunikationsnetzbetreiber.

Durch die Interpretationseinheit kann eine von einer autorisierten Seite, insbesondere von dem Telekommunikationsnetzbetreiber, gesendete spezielle Konfigurationsnachricht als solche interpretiert werden. Die Extrahierungseinheit extrahiert Konfigurationsinformationen aus der speziellen Konfigurationsnachricht, die dann von der Aktivierungs- bzw. Deaktivierungseinheit zum Sperren und/oder Freischalten der mindestens einen weiteren Schnittstelle genutzt werden. Hierdurch kann einfach und schnell das elektronische Endgerät für die Kommunikation von jugendgefährdenden Bildern und Videos zu einem weiteren elektronischen Endgerät durch eine vertrauenswürdige Partei gesperrt werden. Das Freischalten der gesperrten Schnittstellen kann ebenfalls nur durch die autorisierte Partei erfolgen, so dass ein Umkonfigurieren des elektronischen Endgerätes benutzerseitig nicht erfolgen kann. Die Freischaltung erfolgt beispielsweise erst dann, wenn ein hinreichender Nachweis erbracht wird, dass der Nutzer des elektronischen Endgerätes die Volljährigkeit besitzt.

Bevorzugt ist ein elektronisches Endgerät, bei dem die Aktivierungseinheit durch die Konfigurationsinformationen aus einer ersten speziellen Konfigurationsnachricht ansprechbar ist. D.h., nur durch eine spezielle, auf das elektronische Endgerät abgestimmte Konfigurationsnachricht kann das elektronische Endgerät, bevorzugt ein Mobiltelefon, gesperrt werden. Ferner kann die bzw. können die gesperrte(n) Schnittstelle(n) eines elektronischen Endgerätes durch die Deaktivierungseinheit freigeschaltet werden. Hierzu ist die Deaktivierungseinheit des elektronischen Endgerätes durch die Konfigurationsinformationen aus einer weiteren speziellen Konfigurationsnachricht ansprechbar.

Die mindestens eine weitere Schnittstelle des elektronischen Endgerätes, die zur Kommunikation mit weiteren elektronischen Endgeräten dient, ist bevorzugt als eine Bluetooth-, Zarlink-, eine WLAN-, Nahfeldkommunikation- oder Infrarotschnittstelle ausgebildet. Ferner ist denkbar, dass die mindestens eine weitere Schnittstelle als eine USB-Schnittstelle ausgebildet ist. Ein elektronisches Endgerät kann mehrere der weiteren Schnittstellen, die geeignet sind Bilder und Videos an ein weiteres elektronisches Endgerät zu übertragen, aufweisen. Um zu verhindern, dass über das elektronische Endgerät jugendgefährdende Bilder und Videos übertragen werden, werden bei dem erfindungsgemäßen elektronischen Endgerät alle weiteren Schnittstellen durch die empfangene spezielle Konfigurationsnachricht gesperrt.

## Patentansprüche

1. Verfahren zum Betreiben eines elektronischen Endgerätes, wobei das Endgerät eine erste Schnittstelle zu einem zellularen Telekommunikationsnetz sowie mindestens eine weitere Schnittstelle, insbesondere eine Schnittstelle zur Nahfeldkommunikation, zur Kommunikation mit weiteren elektronischen Endgeräten aufweist, **gekennzeichnet durch** folgende vom dem elektronischen Endgerät durchgeführte Schritte:
a) Empfangen einer speziellen, nicht reproduzierbaren Konfigurationsnachricht in Form einer Kurznachricht, aus dem zellularen Telekommunikationsnetz über die erste Schnittstelle, wobei die spezielle Konfigurationsnachricht Zeichen, insbesondere hexadezimale Zeichen, enthält, die nicht über die Tastatur eines elektronischen Endgerätes eingebbar sind;
b) Interpretieren der speziellen Konfigurationsnachricht, und Erkennen, dass es sich um eine spezielle Konfigurationsnachricht handelt, **durch** eine Interpretationseinheit des elektronischen Endgerätes, wobei die spezielle Konfigurationsnachricht, nachdem sie von der Interpretationseinheit des elektronischen Endgeräts als Konfigurationsnachricht erkannt worden ist, nicht als empfangene Nachricht auf einer Anzeigeeinheit des elektronischen Endgeräts angezeigt wird;
c) Automatisches Extrahieren von Konfigurationsinformationen, die zum Sperren der mindestens einen weiteren Schnittstelle genutzt werden, aus der Konfigurationsnachricht **durch** das elektronische Endgerät mittels einer Extrahierungseinheit;
d) Automatisches Sperren der mindestens einen weiteren Schnittstelle **durch** das elektronische Endgerät **durch** eine Umkonfiguration des elektronischen Endgeräts mittels der extrahieren Konfigurationsinformationen zum Verhindern einer Kommunikation des elektronischen Endgeräts zu einem weiteren elektronischen Endgerät über die mindestens eine weitere Schnittstelle, wobei die Sperrung als verborgene Aktion in dem elektronischen Endgerät abläuft..

2. Verfahren nach Anspruch 1, **dadurch gekennzeichnet, dass** das elektronische Endgerät eine weitere spezielle, nicht reproduzierbare Konfigurationsnachricht, insbesondere eine weitere Kurznachricht, aus dem zellularen Telekommunikationsnetz über die erste Schnittstelle empfängt, wobei die weitere spezielle Konfigurationsnachricht Zeichen, insbesondere hexadezimale Zeichen, enthält, die nicht über die Tastatur eines elektronischen Endgerätes eingebbar sind, dass die Interpretationseinheit des elektronischen Endgerätes die weitere spezielle Konfigurationsnachricht interpretiert, dass die Extrahierungseinheit Konfigurationsinformationen, die zum Sperren der mindestens einen weiteren Schnittstelle genutzt werden, aus der weiteren Konfigurationsnachricht automatisch extrahiert und dass das elektronische Endgerät aufgrund der extrahierten Konfigurationsinformationen die mindestens eine weitere Schnittstelle durch eine Umkonfiguration des elektronischen Endgeräts mittels der extrahieren Konfigurationsinformationen automatisch freischaltet zum Ermöglichen einer Kommunikation zu einem weiteren elektronischen Endgerät über die mindestens eine weitere Schnittstelle.

3. Verfahren nach einem der vorhergehenden Ansprüche 1 oder 2, **dadurch gekennzeichnet, dass** die spezielle Konfigurationsnachricht so ausgestaltet ist, dass sie nicht von einem Teilnehmer des zellularen Telekommunikationsnetzes gesendet werden kann.

4. Verfahren nach einem der vorhergehenden Ansprüche 1 bis 3, **dadurch gekennzeichnet, dass** die mindestens eine weitere Schnittstelle mittels der Bluetooth-, der Zarlink-, der WLAN-, der Nahfeldkommunikation- oder der Infrarottechnologie operiert.

5. Elektronisches Endgerät mit einer ersten Schnittstelle zu einem zellularen Telekommunikationsnetz, mit mindestens einer weiteren Schnittstelle, insbesondere einer Schnittstelle zur Nahfeldkommunikation, zur Kommunikation mit weiteren elektronischen Endgeräten und mit einer Konfigurationsnachrichtempfangseinheit zum Empfang von speziellen, nicht reproduzierbaren Konfigurationsnachrichten in Form von Kurznachrichten aus dem zellularen Telekommunikationsnetz, wobei die spezielle Konfigurationsnachricht Zeichen, insbesondere hexadezimale Zeichen, enthält, die nicht über die Tastatur eines elektronischen Endgerätes eingebbar sind; **dadurch gekennzeichnet, dass** das elektronischen Endgerät eine Interpretationseinheit zum Interpretieren einer speziellen Konfigurationsnachricht zum Erkennen, dass es sich um eine spezielle Konfigurationsnachricht handelt, wobei die spezielle Konfigurationsnachricht, nachdem sie von der Interpretationseinheit des elektronischen Endgeräts als Konfigurationsnachricht erkannt worden ist, nicht als empfangene Nachricht auf einer Anzeigeeinheit des elektronischen Endgeräts angezeigt wird, eine Extrahierungseinheit zum automatischen Extrahieren von Konfigurationsinformationen, die zum Sperren der mindestens einen weiteren Schnittstelle genutzt werden, aus der speziellen Konfigurationsnachricht und eine Deaktivierungseinheit zum automatischen Sperren und/oder Freischalten der mindestens einen weiteren Schnittstelle durch eine Umkonfiguration des elektronischen Endgeräts aufgrund der extrahieren Konfigurationsinformationen zum Verhindern oder Herstellen einer Kommunikation des elektronischen Endgeräts zu einem weiteren elektronischen Endgerät über die mindestens eine weitere Schnittstelle, aufweist, wobei die Sperrung und/oder Freischaltung als verborgene Aktion in dem elektronischen Endgerät abläuft

6. Elektronisches Endgerät nach Anspruch 5, **dadurch gekennzeichnet, dass** die Deaktivierungseinheit durch die Konfigurationsinformationen aus einer weiteren speziellen Konfigurationsnachricht ansprechbar ist.

7. Elektronisches Endgerät nach einem der vorhergehenden Ansprüche 5 oder 6, **dadurch gekennzeichnet, dass** die mindestens eine weitere Schnittstelle zur Kommunikation mit weiteren elektronischen Endgeräten als eine Bluetooth-, Zarlink-, eine WLAN, Nahfeldkommunikation- oder Infrarotschnittstelle ausgebildet ist.

## Claims

1. A method of operating an electronic terminal, said terminal having a first interface to a cellular telecommunications network and at least one additional interface, in particular an interface for nearfield communication, for communication with other electronic terminals, **characterized by** the following steps being performed by the electronic terminal:
a) receiving a specific, non-reproducible configuration message in form of a short message from the cellular telecommunications network via said first interface, said specific configuration message comprising signs, in particular hexadecimal signs, which cannot be entered via the keyboard of an electronic terminal;
b) interpreting the specific configuration message and identifying, that it is a specific configuration message, by means of an interpretation unit of said electronic terminal, whereby the specific configuration message, after it has been identified as a configuration message from said interpretation unit of said electronic device, is not being displayed as a received message on a display unit of said electronic terminal;
c) automatically extracting configuration information, which is being used for blocking the at least one additional interface, from the configuration message through said electronic terminal by means of an extraction unit;
d) automatical blocking the at least one additional interface through said electronic terminal by reconfiguring the electronic terminal by means of the extracted configuration information for preventing a communication of the electronic terminal with another electronic terminal via said at least one additional interface, whereby said blocking is performed as a hidden action in the electronic terminal.

2. The method according to claim 1, **characterized in that** the electronic terminal receives a further specific, non-reproducible configuration message, in particular a further short message, from said cellular telecommunications network via said first interface, whereby the further specific configuration message comprises signs, in particular hexadecimal signs, which cannot be entered via the keyboard of an electronic terminal, that the interpretation unit of the electronic terminal interprets the further specific configuration message, that the extraction unit automatically extracts configuration information, that are being used for blocking the at least one additional interface, from the further configuration message, and that the electronic terminal, based on the extracted configuration information, automatically unlocks the at least one additional interface by reconfiguring the electronic terminal by means of the extracted configuration information for enabling a communication to another electronic terminal via said at least one additional interface.

3. The method according to anyone of the preceding claims 1 or 2, **characterized in that** the specific configuration message is designed such that it cannot be sent from a subscriber of the cellular telecommunications network.

4. The method according to anyone of the preceding claims 1 to 3, **characterized in that** the at least one additional interface operates via the Bluetooth-, the Zarlink-, the WLAN-, the nearfield communication- or the infrared technology.

5. An electronic terminal, having a first interface to a cellular telecommunications network, having at least one additional interface, in particular an interface for nearfield communication, for a communication with other electronic terminals, and having a configuration message receiving unit for receiving specific, non-reproducible configuration messages in form of short messages from the cellular telecommunications network, said specific configuration message comprising signs, in particular hexadecimal signs, which cannot be entered via the keyboard of an electronic terminal, **characterized in that** the electronic terminal comprises an interpretation unit for interpreting a specific configuration message for identifying, that it is a specific configuration message, whereby the specific configuration message, after it has been identified as a configuration message from said interpretation unit of the electronic terminal, is not being displayed as a received message on a display unit of said electronic terminal, an extraction unit for automatically extracting configuration information, which is used for blocking the at least one additional interface, from said specific configuration message" and a deactivation unit for automatically blocking and/or unblocking of the at least one additional interface by reconfiguring the electronic terminal due to of the extracted configuration information for preventing or establishing a communication of the electronic terminal to another electronic terminal via said at least one additional interface, whereby the blocking and/or unblocking is performed as a hidden action in the electronic terminal.

6. The electronic terminal according to claim 5, **characterized in that** the deactivation unit can be addressed through the configuration information of a further specific configuration message.

7. The electronic terminal according to anyone of the preceding claims 5 or 6, **characterized in that** the at least one additional interface for the communication with other electronic terminals is provided as a Bluetooth-, a Zarlink-, a WLAN-, a nearfield communication- or as an infrared-interface.

## Revendications

1. Procédé servant à faire fonctionner un terminal électronique, dans lequel le terminal présente une première interface avec un réseau de télécommunication cellulaire ainsi qu'au moins une autre interface, en particulier une interface servant à une communication en champ proche, servant à la communication avec d'autres terminaux électroniques, **caractérisé par** des étapes qui suivent mises en oeuvre par le terminal électronique, lesquelles consistent à :
a) recevoir un message de configuration spécifique non reproductible sous la forme d'un message court, provenant du réseau de télécommunication cellulaire par l'intermédiaire de la première interface, dans lequel le message de configuration spécifique comporte des caractères, en particulier des caractères hexadécimaux, qui ne peuvent pas être saisis par l'intermédiaire du clavier d'un terminal électronique ;
b) interpréter le message de configuration spécifique et identifier qu'il s'agit d'un message de configuration spécifique, par une unité d'interprétation du terminal électronique, dans lequel le message de configuration spécifique n'est pas indiqué comme un message reçu sur une unité d'affichage du terminal électronique après qu'il a été identifié par l'unité d'interprétation du terminal électronique comme un message de configuration ;
c) extraire de manière automatique des informations de configuration, qui sont utilisées pour bloquer l'au moins une autre interface, du message de configuration par le terminal électronique au moyen d'une unité d'extraction ;
d) bloquer de manière automatique l'au moins une autre interface par le terminal électronique par une reconfiguration du terminal électronique au moyen des informations de configuration extraites afin d'empêcher une communication du terminal électronique avec un autre terminal électronique par l'intermédiaire de l'au moins une autre interface, dans lequel le blocage se déroule sous la forme d'une action cachée dans le terminal électronique.

2. Procédé selon la revendication 1, **caractérisé en ce que** le terminal électronique reçoit un autre message de configuration spécifique non reproductible, en particulier un autre message court, provenant du réseau de télécommunication cellulaire par l'intermédiaire de la première interface, dans lequel l'autre message de configuration spécifique comporte des caractères, en particulier des caractères hexadécimaux, qui ne peuvent pas être saisis par le clavier d'un terminal électronique, **en ce que** l'unité d'interprétation du terminal électronique, interprète l'autre message de configuration spécifique, **en ce que** l'unité d'extraction extrait de manière automatique des informations de configuration, qui sont utilisées afin de bloquer l'au moins une autre interface, de l'autre message de configuration, et **en ce que** le terminal électronique active de manière automatique, sur la base des informations de configuration extraites, l'au moins une autre interface par une reconfiguration du terminal électronique au moyen des informations de configuration extraites afin de permettre une communication avec un autre terminal électronique par l'intermédiaire de l'au moins une autre interface.

3. Procédé selon l'une quelconque des revendications précédentes 1 ou 2, **caractérisé en ce que** le message de configuration spécifique est configuré de telle manière qu'il ne peut pas être envoyé par un abonné du réseau de télécommunication cellulaire.

4. Procédé selon l'une quelconque des revendications précédentes 1 à 3, **caractérisé en ce que** l'au moins une autre interface opère au moyen de la technologie Bluetooth, Zarlink, WLAN, de communication en champ proche ou infrarouge.

5. Terminal électronique comprenant une première interface avec un réseau de télécommunication cellulaire, comprenant au moins une autre interface, en particulier une interface de communication en champ proche, servant à la communication avec d'autres terminaux électroniques, et comprenant une unité de réception de message de configuration servant à recevoir des messages de configuration spécifiques non reproductibles sous la forme de messages courts provenant du réseau de télécommunication cellulaire, dans lequel le message de configuration spécifique comporte des caractères, en particulier des caractères hexadécimaux, qui ne peuvent pas être saisis par le clavier d'un terminal électronique ; **caractérisé en ce que** l'appareil électronique présente une unité d'interprétation servant à interpréter un message de configuration spécifique servant à identifier s'il s'agit d'un message de configuration spécifique, dans lequel le message de configuration spécifique n'est pas affiché en tant que message reçu sur une unité d'affichage du terminal électronique après que le message de configuration a été identifié par l'unité d'interprétation du terminal électronique comme étant un message de configuration, une unité d'extraction servant à extraire automatiquement des informations de configuration, qui sont utilisées afin de bloquer l'au moins une autre interface, du message de configuration spécifique, et une unité de désactivation servant à bloquer et/ou à activer de manière automatique l'au moins une autre interface par une reconfiguration du terminal électronique sur la base des informations de configuration extraites afin d'empêcher ou d'établir une communication du terminal électronique avec un autre terminal électronique par l'intermédiaire de l'au moins une autre interface, dans lequel le blocage et/ou l'activation se déroulent dans l'appareil électronique sous la forme d'une action cachée.

6. Appareil électronique selon la revendication 5, **caractérisé en ce que** l'unité de désactivation est accessible par les informations de configuration provenant d'un autre message de configuration spécifique.

7. Terminal électronique selon l'une quelconque des revendications précédentes 5 ou 6, **caractérisé en ce que** l'au moins une autre interface est réalisée aux fins de la communication avec d'autres terminaux électroniques sous la forme d'une interface Bluetooth, Zarlink, WLAN, de communication en champ proche ou infrarouge.
